# EUROPÄISCHE PATENTSCHRIFT

(11) **EP 1 957 315 B1**
(45) Veröffentlichungstag und Bekanntmachung des Hinweises auf die Patenterteilung: **25.02.2009**
(21) Anmeldenummer: 06830190.2
(22) Anmeldetag: 29.11.2006
(51) Int. Cl.: B60R 7/06

(54) **STAUFACH FÜR EIN KRAFTFAHRZEUG, HANDSCHUHKASTEN UND INSTRUMENTENTAFEL**
STORAGE COMPARTMENT FOR A MOTOR VEHICLE, GLOVE COMPARTMENT AND INSTRUMENT BOARD
COMPARTIMENT DE RANGEMENT POUR UN VEHICULE AUTOMOBILE, BOITE A GANTS ET TABLEAU DE BORD

(30) Priorität: 29.11.2005 DE 102005057189; 29.11.2005 DE 102005057215; 29.11.2005 DE 102005057188
(43) Veröffentlichungstag der Anmeldung: 20.08.2008
(73) Patentinhaber: Faurecia Innenraum Systeme GmbH, 76767 Hagenbach (DE)
(72) Erfinder: SAUER, Rolf, 68794 Oberhausen-Rheinhausen (DE)
(74) Vertreter: Richardt, Markus Albert
(86) Internationale Anmeldenummer: PCT/EP2006/069058
(87) Internationale Veröffentlichungsnummer: WO 2007/063074

(56) Entgegenhaltungen:
- EP-A- 1 048 525
- EP-A- 1 193 129
- EP-A1- 0 668 189
- DE-A1- 19 930 059
- US-A- 5 071 162
- US-A- 5 197 775
- US-A1- 2003 178 434

## Beschreibung

Die vorliegende Erfindung betrifft ein Staufach für ein Kraftfahrzeug, nämlich einen Handschuhkasten, sowie eine Instrumententafel mit einem Handschuhkasten.

Aus dem Stand der Technik sind verschiedene Staufächer für Kraftfahrzeuge bekannt. Insbesondere ist aus der EP 0 668 189 B1 eine Instrumententafel für ein Kraftfahrzeug bekannt, die zwei Stauräume beinhaltet, welche durch entsprechende Deckel abgedeckt werden. Die Deckel sind nach oben bzw. unten aufschwenkbar. Handschuhkästen sind u. a. aus DE 3432799 C2, EP 1 193 129 A1, EP 1 048 525 A1 und DE 199 30 059 A1 bekannt.

Die EP 1 048 525 A1 offenbart ein Gehäuse mit einer Öffnung welche durch zwei Klappen verdeckt ist wobei die beiden Klappen zwischen einer Schließposition und einer Offnungsposition bewegbar sind Ferner ist ein Mechanismus vorgesehen, mittels welchem die beiden Klappen gleichzeitig in die Öffnungs- oder Schließposition überführt werden können

Die DE 199 30 059 A1 offenbart eine Instrumententafel eines Kraftfahrzeugs mit einem Handschuhkasten, der in einer Instrumententafelöffnung angeordnet ist und der durch eine Handschuhkastenklappe verschließbar ist Im geschlossenen Zustand ist dabei zwischen einem Öffnungsrand der Instrumententafel sowie einem Kastenaussenrand oder gegebenenfalls einem Klappenrand der Handschuhkastenklappe eine Fuge gebildet.

Der Erfindung liegt dem gegenüber die Aufgabe zu Grunde, ein verbessertes Staufach für ein Kraftfahrzeug, nämlich einen Handschuhkasten, zu schaffen sowie eine verbesserte Instrumententafel mit einem Handschuhkasten.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Staufach für ein Kraftfahrzeug geschaffen, welches zumindest erste und zweite Stauräume beinhaltet. Die beiden Stauräume werden durch entsprechende Deckel abgedeckt. Eine Fuge zwischen den Deckeln wird durch einen der Deckel überdeckt. Durch die Versenkbarkeit des oberen Deckel wird das Verletzungsrisiko für den Fall verringert, dass sich bei geöffnetem oberen Deckel ein Aufprall ereignet. Der obere Deckel ist diesbezüglich besonders kritisch, da er sich im oder nahe des Kopfaufschlagbereichs des Beifahrers befindet. Der geöffnete untere Deckel ist bei einem Aufprall weniger verletzungsrelevant, da er sich im Knieaufprallbereich befindet. Insbesondere kann der untere Deckel zuklappen, wenn sich ein Aufprall ereignet, indem der Beifahrer mit seinen Knien gegen den unteren

Deckel stößt. Der untere Deckel kann dann als Prallfläche dienen. Besonderes bevorzugt ist also eine Ausführungsform, bei der nur der obere Deckel ganz oder teilweise versenkbar ist, wohingegen der untere Deckel in den Kraftfahrzeuginnenraum hinein aufschwenkbar ist, so dass er bei einem Aufprall zuschwenken kann und dann als Prallfläche wirkt. Die Erfindung ermöglicht es also eine ästhetisch ansprechende Gestaltung des Handschuhkastens mit einer erhöhten Sicherheit und einer komfortablen Staufunktion zu kombinieren.

Dies hat den Vorteil, dass eine Doppelpassung der Deckel vermieden werden kann, wodurch die Toleranzsituation zwischen den beiden Deckeln entschärft werden kann. Durch die Überdeckung der Fuge von einem der beiden Deckel wird ferner ein verbessertes Design des Staufachs bzw. des Kraftfahrzeug-Innenraums ermöglicht.

In einer Ausführungsform der Erfindung ist einer der Deckel so ausgebildet, dass er die Fuge von einer Sitzposition im Kraftfahrzeug-Innenraum her betrachtet verdeckt.

In einer Ausführungsform der Erfindung sind die Stauräume übereinander angeordnet. Die untere Kante des oberen Deckels ist dabei relativ zu der Sitzposition im Kraftfahrzeug-Innenraum vor der oberen Kante des unteren Deckels angeordnet. Hierdurch wird die obere Kante des unteren Deckels aus der Sitzposition betrachtet, verdeckt.

In einer Ausführungsform der Erfindung erstreckt sich der obere Deckel über eine Trennwand der Stauräume hinweg. Durch den sich über die Trennwand hinweg erstreckenden Bereich des oberen Deckels wird ein oberer Bereich des unteren Deckels und damit eine Fuge zwischen den Deckeln verdeckt.

In einer Ausführungsform der Erfindung sind die Deckel so miteinander gekoppelt, dass bei Öffnung eines der Deckel, der jeweils andere Deckel ebenfalls geöffnet wird.

Dies hat den Vorteil, dass einerseits der Stauraum in zwei Stauräume unterteilt ist, so dass verschiedene Gegenstände in die Stauräume einsortiert werden können, und andererseits beide Stauräume durch eine einzige Nutzeraktion zugänglich sind, indem nämlich entweder nur der eine oder der andere der beiden Deckel betätigt wird.

Dadurch kann insbesondere vermieden werden, dass ein Benutzer die beiden Deckel nacheinander jeweils gesondert öffnen muss, wenn er oder sie einen bestimmten Gegenstand in den Stauräumen sucht und entnehmen möchte.

Die Kopplung der Deckel kann auf unterschiedliche Arten erfolgen. Beispielsweise kann die Kopplung der Deckel mechanisch, insbesondere über einen Hebelmechanismus, realisiert sein. Alternativ oder zusätzlich kann die Kopplung elektromechanisch erfolgen. Hierbei wird durch Betätigung eines der beiden Deckel ein Aktuator, wie zum Beispiel ein Elektromotor, eingeschaltet, der den jeweils anderen Deckel oder beide Deckel antreibt, um sie zu öffnen.

Alternativ oder zusätzlich kann die Kopplung der Deckel auch elektronisch erfolgen. Hierzu wird eine Betätigung eines der beiden Deckel durch den Benutzer sensiert. Dies hat ein Steuerungssignal zur Folge, durch welches ein oder mehrere Aktuatoren, insbesondere Elektromotoren angesteuert werden, um die beiden Deckel zu öffnen. Zur Eingabe eines Öffnungskommandos für die Öffnung der beiden Deckel kann auf einem oder beiden der Deckel oder an der Instrumententafel ein Schalter, wie zum Beispiel ein Druckschalter, berührungsloser Schalter, also zum Beispiel ein kapazitiver oder induktiver Näherungssensor, oder dergleichen angeordnet sein. Die Betätigung eines solchen Schalters wird durch ein Steuergerät, beispielsweise eine sogenannte Electronic Control Unit (ECU) sensiert, so dass die ECU ein oder mehrere Aktuatoren ansteuert, so dass die Deckel geöffnet werden.

Die Kopplung der Deckel kann so ausgebildet sein, dass das Schließen der Deckel unabhängig voneinander erfolgen kann, wie zum Beispiel durch manuelles Schließen der Deckel. Die Kopplung der Deckel kann auch so ausgebildet sein, dass durch Schließen eines der Deckel auch der jeweils andere Deckel automatisch mit geschlossen wird. Die hierfür erforderliche Kopplung der Deckel kann wiederum mechanisch, elektromechanisch und / oder elektronisch ausgebildet sein.

In einer Ausführungsform der Erfindung sind die Deckel so miteinander gekoppelt, dass das Öffnen und/oder das Schließen der Deckel im wesentlichen synchron erfolgt.

In einer Ausführungsform der Erfindung ist einer der Stauräumen in einer Einbauposition des Staufachs oberhalb des anderen Stauraums angeordnet. Der den oberen Stauraum abdeckende Deckel ist dabei so ausgebildet, dass er in seiner geschlossenen Position eine Fuge zwischen den Deckeln verdeckt.

In einer Ausführungsform der Erfindung hat nur der untere Deckel einen Betätigungsgriff. Die Betätigung des oberen Deckels kann so erfolgen, dass ein Benutzer an einer die Fuge zwischen den Deckeln überdeckenden Kante des oberen Deckels zieht.

In einer Ausführungsform der Erfindung verläuft zwischen den beiden Stauräumen eine in Einbauposition im wesentlichen horizontale Trennwand. Vorzugsweise verdeckt der obere der beiden Deckel die Trennwand, wenn er geschlossen ist.

In einer Ausführungsform der Erfindung sind die beiden Deckel über einen Hebel mechanisch gekoppelt. Der Hebel hat eine Achse, die bezüglich eines Gehäuses des Staufachs schwenkbar gelagert ist.

In einer Ausführungsform der Erfindung weist die mechanische Kopplung einen weiteren Hebel auf, der an dem schwenkbar gelagerten Hebel angreift.

In einer weiteren Ausführungsform erfolgt die schwenkbare Lagerung der Achse des erstgenannten Hebels durch einen weiteren Hebel, der seinerseits mittels einer Schwenkachse an dem Gehäuse des Staufachs befestigt ist.

In einer Ausführungsform der Erfindung hat der dritte Hebel eine Anschlagfläche zur Begrenzung der Schwenkbewegung.

Die mechanische Kopplung der Deckel mit Hilfe von ein oder mehreren Hebeln hat den Vorteil, dass diese robust und mit relativ geringem Aufwand realisierbar ist.

Nach einer Ausführungsform der Erfindung wird durch das Staufach ein Handschuhkasten zur Verfügung gestellt.

In einem weiteren Aspekt betrifft die Erfindung eine Instrumententafel mit einem integrierten erfindungsgemäßen Staufach.

In einer Ausführungsform der Erfindung erfolgt die Kopplung der das Staufach abdeckenden Deckel mechanisch, zum Beispiel über ein oder mehrere Hebel, elektromechanisch und / oder elektronisch.

In einer weiteren Ausführungsform ist die Kopplung zwischen den Deckeln unterbrochen bzw. eine solche Kopplung nicht vorhanden. Einer der beiden Stauräume beinhaltet einen Energieabsorptionskörper zur Absorption von Stoßenergie. Beispielsweise beinhaltet der untere der beiden Stauräume einen solche Energieabsorptionskörper als Knieaufprallschutz, d.h. als sog. Kneepad. Der Energieabsorptionskörper kann beispielsweise aus einem Schaumstoff, einem Schaumverbundstoff, einer wabenförmigen Struktur oder dergleichen bestehen.

In der Ausführungsform mit Energieabsorptionskörper ist der entsprechende Deckel, der den den Energieabsorptionskörper beinhaltenden Stauraum abdeckt, mit einem Gehäuse des Staufachs und/oder der Instrumententafel fest verbunden.

Dies ist zur Realisierung von verschiedenen Varianten eines Kraftfahrzeug-Models mit oder ohne Beifahrer Kneepad besonders vorteilhaft, da unabhängig von dem Vorhandensein oder Nichtvorhandensein des Kneepads dasselbe oder im wesentlichen dasselbe Design der Instrumententafel verwendet werden kann. In der Variante mit Energieabsorptionskörper, insbesondere Kneepad, ist keine Kopplung zwischen den Deckeln gegeben. Der Deckel, welcher den den Energieabsorptionskörper beinhalteten Stauraum abdeckt, ist fest mit der Instrumententafel verbunden. Dieser Deckel wirkt also als Aufprallfläche für die Energieabsorption bei einem Frontalaufprall.

Die Realisierung der verschiedenen Varianten eines Kraftfahrzeugmodels mit oder ohne Kneepad bei Beibehaltung desselben äußeren Designs der Instrumententafel ist besonders vorteilhaft für die Realisierung verschiedener Ländervarianten des Kraftfahrzeug-Models, da in einigen Ländern Kneepads gesetzlich vorgeschrieben sind, sowie auch zur Verfügungstellung unterschiedlicher Ausstattungsoptionen je nach Kundenwunsch.

In einer weiteren Ausführungsform der Erfindung ist zumindest einer der beiden Deckel versenkbar. Wenn der betreffende Deckel geöffnet wird, schwenkt oder fährt er teilweise oder vorzugsweise vollständig hinter die Oberfläche der Instrumententafel zurück.

Hierdurch kann das Verletzungsrisiko bei einem Aufprall des Kraftfahrzeugs, insbesondere bei einem Frontalaufprall, minimiert werden.

Insbesondere können hierdurch Verletzungen an einem geöffneten und in dem Kraftfahrzeug-Innenraum hinein ragenden Deckel vermieden werden. Beispielsweise kann vermieden werden, dass ein geöffneter, in den Kraftfahrzeug-Innenraum hineinragender Deckel durch den Airbag gelöst oder beschädigt werden kann. Durch den abgelösten Deckel, Deckelteile oder von dem Deckel abgelöste Partikel bestünde sonst u.U. ein Verletzungsrisiko für die Insassen des Kraftfahrzeugs.

Ferner kann hierdurch auch vermieden werden, dass ein sich aufgrund des Aufpralls entfaltender Airbag aufgrund seiner Entfaltungsbewegung den geöffneten Deckel ganz oder teilweise schließt, wobei Körperteile eingequetscht werden könnten.

In einem weiteren Aspekt betrifft die Erfindung eine Instrumententafel mit einem Staufach, insbesondere mit einem Handschuhkasten. Der Handschuhkasten hat beispielsweise zwei übereinander angeordnete Deckel, die in entgegengesetztem Richtungssinn geöffnet werden können. Die zwischen den Deckeln gebildete Fuge wird durch den oberen der beiden Deckel überdeckt.

Das Öffnen und Schließen der Deckel kann mit einer Dreh-, Schwenk- und / oder translatorischen Bewegung erfolgen. Vorzugsweise wird der obere Deckel beim Öffnen teilweise oder vollständig in der Instrumententafel versenkt, so dass der geöffnete obere Deckel nicht oder fast nicht in den Innenraum des Kraftfahrzeugs hinein ragt.

In dem unteren Stauraum des Handschuhkastens kann ein Energieabsorptionskörper angeordnet sein. In diesem Fall ist der untere Deckel nicht öffnenbar, das heißt, er ist fest mit dem Gehäuse des Handschuhkastens und / oder mit der Instrumententafel fest verbunden.

Statt mit zwei separaten Deckeln können die Stauräume in dem Staufach auch mit einem einzigen Deckel abgedeckt werden, dessen äußere Kontur der Kontur der beiden separaten Deckel in deren jeweiliger Schließposition entspricht. Optional kann dabei auch die Trennwand entfallen, die die beiden Stauräume voneinander trennt.

Die vorliegende Erfindung schafft also ein Handschuhkastenmodulsystem, welches verschiedene Ausstattungsvarianten bei jeweils gleichem oder im wesentlichen gleichen äußeren Erscheinungsbild des Staufachs, insbesondere des Handschuhkastens, bzw. der Instrumententafel bietet.

Im weiteren werden verschiedene Ausführungsformen der Erfindung anhand der Zeichnungen näher erläutert. Es zeigen:
- Figur 1: eine schematische Schnittansicht einer Ausführungsform eines erfindungsgemäßen Staufachs.
- Figur 2: eine perspektivische Ansicht einer Ausführungsform eines erfindungsgemäßen Staufachs mit mechanischer Kopplung der Deckel.
- Figur 3: die Ansicht der Figur 2 bei geöffneten Deckeln.
- Figur 4: eine Seitenansicht einer Ausführungsform einer erfindungsgemäßen Instrumententafel mit einem Handschuhkasten,
- Figur 5: eine perspektivische Ansicht der Instrumententafel vom KraftfahrzeugInnenraum her bei geöffneten Deckeln,
- Figur 6: eine Seitenansicht einer Ausstattungsvariante der in der Figur 4 gezeigten Ausführungsform mit Knieaufprallschutz,
- Figur 7: die Ansicht der Figur 5 in der Ausstattungsvariante mit Knieaufprallschutz,
- Figur 8: eine perspektivische Ansicht einer Ausstattungsvariante der Instrumententafel mit einem einzigen Deckel,
- Figur 9: eine perspektivische Ansicht einer Ausstattungsvariante der Instrumententafel gemäß Figur 8 mit einem einzigen Stauraum,
- Figur 10: eine perspektivische Ansicht einer drehbaren Lagerung für den oberen Deckel zur Versenkung in der Instrumententafel,
- Figur 11: eine perspektivische Ansicht einer Antriebsvorrichtung mit einer Kulissenführung für den oberen Deckel, '
- Figur 12: eine schematische Schnittansicht einer weiteren Ausführungsform eines erfindungsgemäßen Handschuhkastens,

Einander entsprechende Elemente in der nachfolgenden Figurenbeschreibung sind mit denselben Bezugszeichen gekennzeichnet.

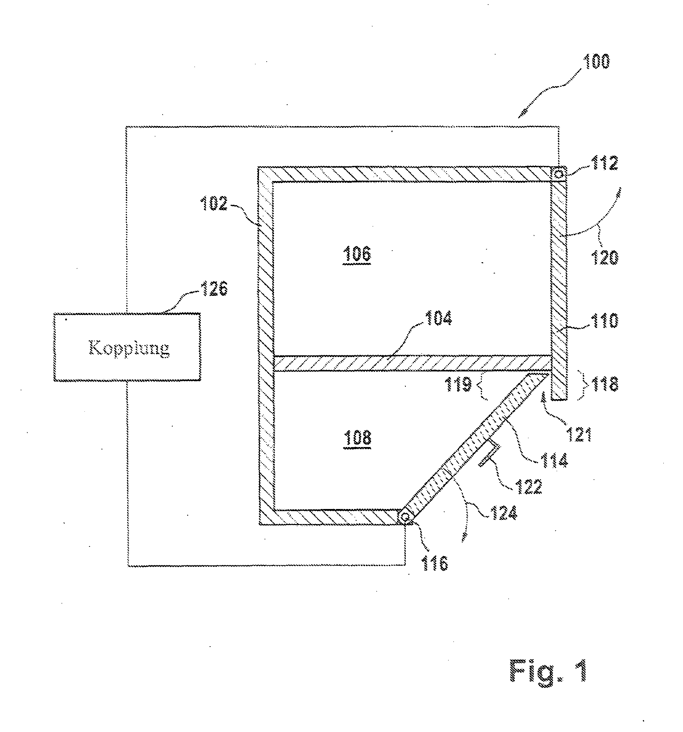

Die Figur 1 zeigt ein Staufach 100 für ein Kraftfahrzeug, wie zum Beispiel einen Handschuhkasten oder dergleichen. Das Staufach 100 hat ein Gehäuse 102, welches durch eine Trennwand 104 in einen oberen Stauraum 106 und einen unteren Stauraum 108 unterteilt ist. In dem hier betrachteten Ausführungsbeispiel verläuft die Trennwand 104 in ihrer Einbauposition im wesentlichen in horizontale Richtung.

Ein Deckel 110 ist an dem Gehäuse 102 um eine Achse 112 nach oben schwenkbar gelagert. In seiner in der Figur 1 dargestellten geschlossenen Position deckt der Deckel 110 den Stauraum 106 ab.

Ein weiterer Deckel 114 des Staufachs 100 ist um eine Achse 116 an dem Gehäuse 102 nach unten schwenkbar gelagert. In seiner in der Figur 1 gezeigten geschlossenen Position deckt der Deckel 114 den unteren Stauraum 108 ab.

In der hier betrachteten Ausführungsform erstreckt sich der Deckel 110 über die Trennwand 104 hinweg. Dadurch wird an dem Deckel 110 ein Kantenbereich 118 gebildet. Ein Benutzer kann den Deckel 110 in dem Kantenbereich 118 bequem anfassen, um diesen in die Schwenkrichtung 120 nach oben aufzuschwenken. Der Kantenbereich verdeckt den bei geschlossenen Deckeln 110, 114 vom Fahrzeuginnenraum betrachtet dahinter liegenden Bereich 119 des Deckels 114, der eine Fuge 121 mit dem anderen Deckel 110 bildet.

Der untere Deckel 114 kann einen Betätigungsgriff 122 aufweisen. Durch Ziehen an dem Betätigungsgriff 122 kann ein Benutzer den unteren Deckel 114 in Schwenkrichtung 124 nach unten aufschwenken.

Die beiden Deckel 110 und 114 können über eine Kopplung 126 miteinander gekoppelt sein, so dass bei Öffnung eines der beiden Deckel der jeweils andere Deckel ebenfalls geöffnet wird. Die Kopplung 126 kann so ausgebildet sein, dass das Gleiche auch für das Schließen der Deckel 110, 114 gilt, das heißt, das bei Schließung eines der Deckel der jeweils andere Deckel ebenfalls automatisch mit geschlossen wird.

Die Kopplung 126 kann hierzu mechanisch, elektromechanisch und / oder elektronisch ausgebildet sein.

In dem hier betrachteten Ausführungsbeispiel ist die Kopplung 126 so ausgebildet, dass beim Schließen der Deckel 110,114 der Deckel 114 dem Deckel 110 voreilt, so dass der Deckel 144 seine in der Fig. 1 gezeigte geschlossene Position erreicht hat bevor der Deckel 110 seine in der Fig. 1 gezeigte geschlossene Position erreicht. Dadurch wird vermieden, dass die Deckel 110, 144 kurz vor erreichen der jeweiligen geschlossenen Position mit deren äußeren Kanten aufeinanderprallen.

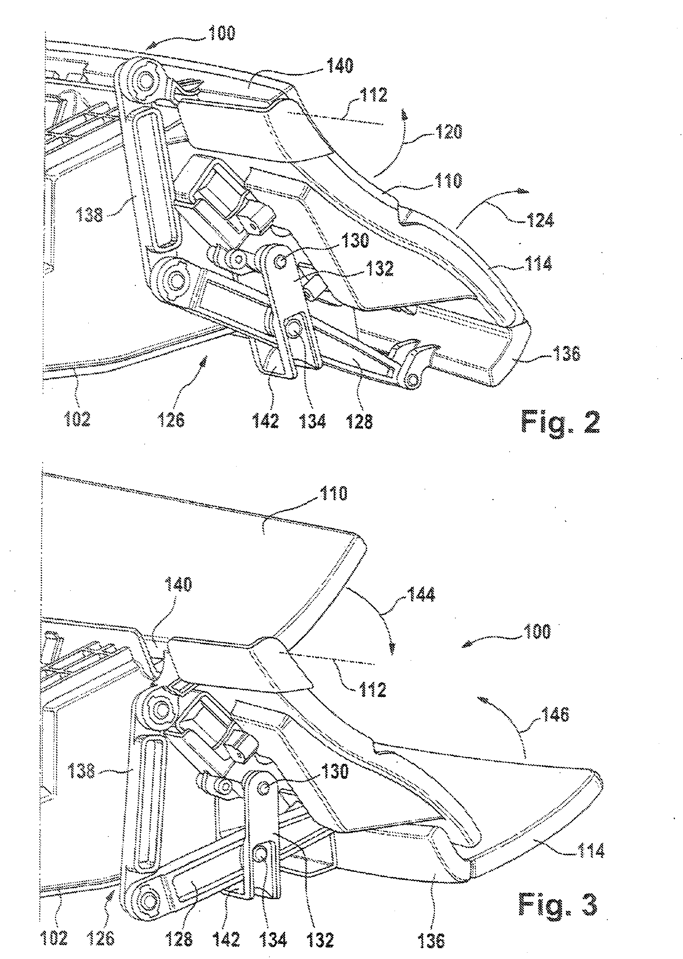

Die Figur 2 zeigt in perspektivischer Ansicht eine mechanische Ausführung der Kopplung 126 mit Hilfe eines Hebelmechanismus.

Die Kopplung 126 hat in der Ausführungsform der Figur 2 einen Hebel 128. Der Hebel 128 ist um eine an dem Gehäuse 102 befestigte Achse 130 schwenkbar gelagert. Hierzu hält die Achse 130 einen weiteren Hebel 132, der zwei einander gegenüberliegende Schenkel aufweist, durch die hindurch der Hebel 128 verläuft. Der Hebel 128 ist mit einer zwischen den gegenüberliegenden Schenkeln des Hebels 132 verlaufenden Achse 134 mit dem Hebel 132 verbunden.

Ein Ende des Hebels 128 ist mit einem unteren Bereich 136 des unteren Deckels 114 schwenkbar verbunden. An dem anderen Ende des Hebels 128 ist ein weiterer Hebel 138 schwenkbar gelagert. Das andere Ende des Hebels 138 ist mit einem oberen Bereich 140 des oberen Deckels 110 schwenkbar verbunden.

In der Ausführungsform der Figur 2 hat der Hebel 132 an seinem der Achse 130 gegenüberliegenden Ende eine Anschlagfläche 142, die die beiden gegenüberliegenden Schenkel des Hebels 132 miteinander verbindet. Die Anschlagfläche 142 hat ein gekrümmtes Profil. Durch die Anschlagfläche 142 wird eine Schwenkbewegung des Hebels 128 um die Achse 134 zum Öffnen bzw. Schließen der Deckel 110 und 114 begrenzt.

Zum Öffnen der Deckel 110 und 114 betätigt ein Benutzer einen der beiden Deckel, indem er oder sie beispielsweise den Deckel 110 an dem Kantenbereich 118 ergreift und nach oben zieht, oder indem er oder sie den Deckel 114 mit Hilfe des Betätigungsgriffs 122 in die Schwenkrichtung 124 nach unten zieht.

Wenn die Betätigungskraft an dem oberen Deckel 110 angreift, um diesen in Schwenkrichtung 120 aufzuschwenken, wird die Betätigungskraft über den Hebel 138 auf den Hebel 128 übertragen, so dass dieser eine Schwenkbewegung um seine Achse 134 und um die Achse 130 ausführt, die durch die Anschlagfläche 142 begrenzt wird. Hierdurch wird der untere Deckel 114 in Schwenkrichtung 124 geöffnet.

Greift die Betätigungskraft dagegen an den unteren Deckel 114 an, um diesen in Schwenkrichtung 124 zu öffnen, so wird die Betätigungskraft über den Hebel 128 und den Hebel 138 zu dem oberen Deckel 110 übertragen, so dass dieser in Schwenkrichtung 120 aufschwenkt, wobei der Hebel 128 wiederum Schwenkbewegungen um die Achsen 134 und 130 ausführt, die durch die Anschlagfläche 142 begrenzt werden.

Die Figur 3 zeigt die Stellung der Hebel 128, 132 und 138 bei geöffneten Deckeln 110 und 114.

Zum Schließen der Deckel 110 und 114 kann entsprechend vorgegangen werden. Hierzu kann ein Benutzer den oberen Deckel 110 in die Schwenkrichtung 144 nach unten drücken oder den Deckel 114 in die Schwenkrichtung 146 nach oben ziehen. Die entsprechenden Schließkräfte werden dabei über die Kopplung 126 von dem betätigten Deckel auf den jeweils anderen Deckel übertragen.

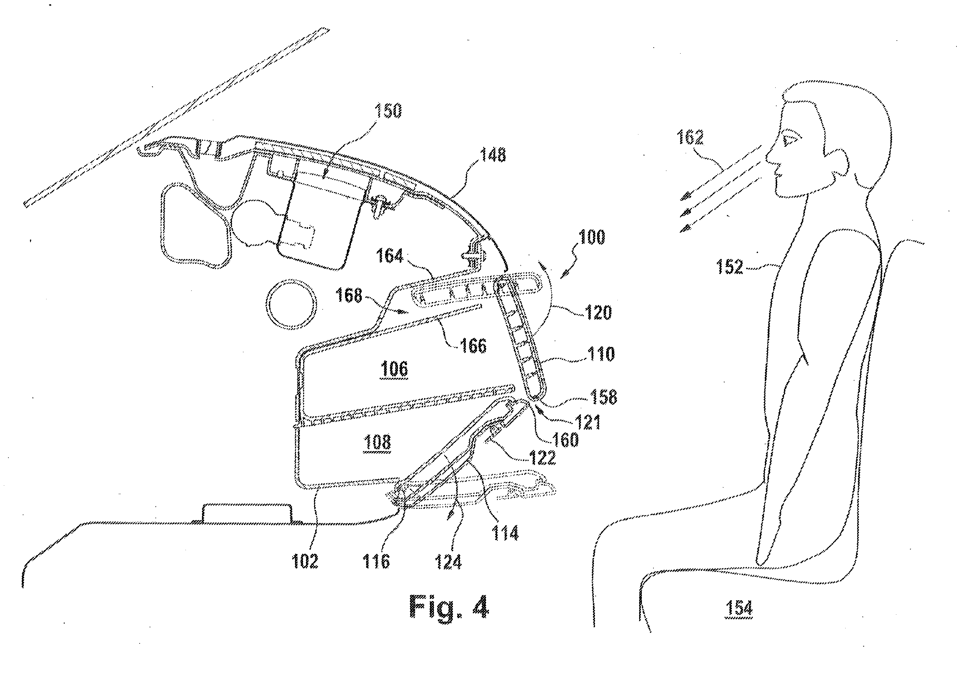

Die Figur 4 zeigt einen Querschnitt einer Instrumententafel 148 mit einem Staufach 100. Das Staufach 100 ist unterhalb eines Beifahrerairbags 150 angeordnet. Der obere Deckel 110 des Staufachs 100 erstreckt sich über die Trennwand 104 hinweg, so dass er eine Fuge 121 zwischen dem oberen Deckel 110 und dem unteren Deckel 114 überdeckt. Aufgrund dessen ist die Fuge 121 für einen Beifahrer 152 nicht sichtbar, wenn sich dieser in seiner normalen Sitzposition auf einem Beifahrersitz 154 befindet.

Der obere Deckel 110 hat eine untere Kante 158, die aus Richtung des Beifahrers 152 betrachtet vor einer oberen Kante 160 des unteren Deckels 114 liegt. Daher überdeckt der Deckel 110 die zwischen der unteren Kante 158 und der oberen Kante 160 gebildete Fuge 121, so dass diese in Blickrichtung 162 des Beifahrers 152 unsichtbar ist, wenn die Deckel 110 und 114 geschlossen sind. In der hier betrachteten Ausführungsform wird zwischen einer oberen Wandung 164 des Gehäuses 102 und einer oberen Begrenzung 166 des Stauraums 106 ein Aufnahmebereich 168 für den Deckel 110 gebildet. Der Aufnahmebereich 168 befindet sich in Einbauposition des Staufachs 100 im Inneren der Instrumententafel 148.

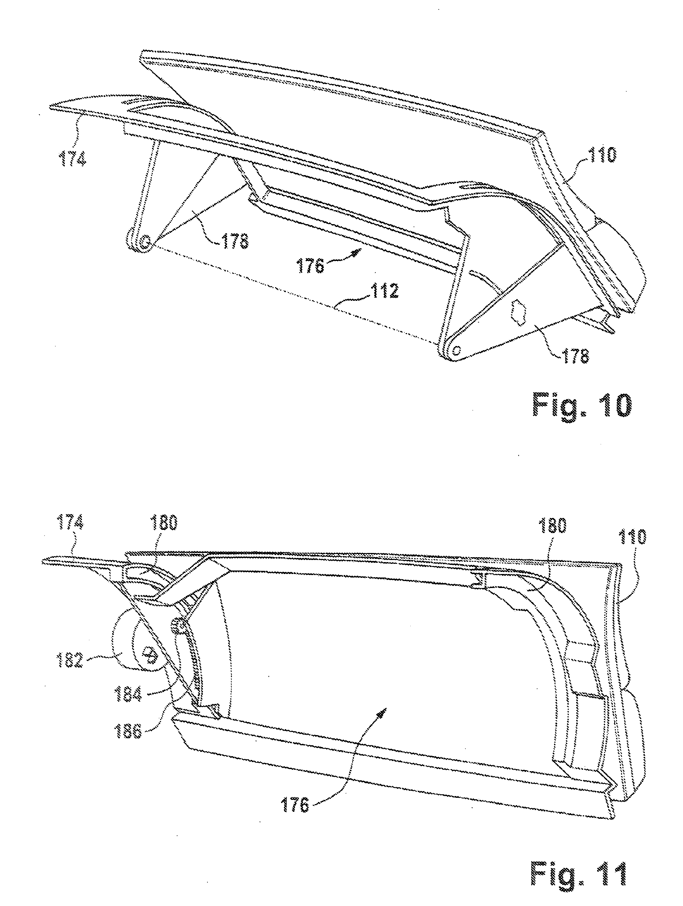

Beim Öffnen des Deckels 110 wird dieser zumindest teilweise in dem Aufnahmebereich 168 versenkt, wie mit gestrichelten Linien in der Figur 4 dargestellt. Dies kann durch eine Drehbewegung und / oder eine translatorische Bewegung erfolgen, wie weiter unten näher anhand der Ausführungsbeispiele der Figuren 10 und 11 erläutert.

Zur Öffnung des Staufachs 100 ergreift der Beifahrer 152 den oberen Deckel 110 im Bereich von dessen unterer Kante 158 und zieht die untere Kante nach oben, wobei der Deckel 110 eine Öffnungsbewegung durchführt, durch welche er in den Aufnahmebereich 168 gedreht oder verfahren wird. Falls die beiden Deckel 110 und 114 miteinander gekoppelt sind, öffnet sich gleichzeitig der untere Deckel 114 durch eine Schwenkbewegung in seine in der Figur 4 ebenfalls mit gestrichelten Linien dargestellte, geöffnete Position.

Alternativ kann die Öffnung der beiden miteinander gekoppelten Deckel 110 und 114 auch durch Betätigung des Betätigungsgriffs 122 initiiert werden.

Zum Schließen der Deckel 110 und 114 kann der Beifahrer 152 den zumindest teilweise in dem Aufnahmebereich 168 versenkten Deckel 110 im Bereich von dessen unterer Kante 158 ergreifen und aus dem Aufnahmebereich 168 herausziehen. Bei miteinander gekoppelten Deckeln 110 und 114 führt dies gleichzeitig zur Schließung des unteren Deckels 114.

Alternativ kann der Beifahrer 152 auch die beiden Deckel 110 und 114 schließen, wenn beide miteinander gekoppelt sind, indem er den unteren Deckel 114 betätigt. Dadurch wird der obere Deckel 110 aus seinem Aufnahmebereich 168 heraus in seine geschlossene Position gedreht bzw. verfahren.

Diese Ausführungsform ist besonders vorteilhaft, da ein Ergreifen des oberen Deckels 110 im Bereich von dessen unterer Kante 158 für den Beifahrer 152 mit Schwierigkeiten verbunden sein kann, insbesondere wenn der Deckel 110 vollständig in den Aufnahmebereich 168 versenkt worden ist. In diesem Fall ist die Schließung des oberen Deckels 110 aufgrund einer Betätigung des unteren Deckels 114 vorteilhaft.

Ein weiterer Vorteil der Ausführungsform der Figur 4 besteht darin, dass aufgrund der zumindest teilweisen Versenkbarkeit des Deckels 110 in dem Aufnahmebereich 168 vermieden werden kann, dass der Beifahrer-Airbag 150 bei seiner Entfaltung auf dem geöffneten Deckel 110 aufschlägt, wodurch Verletzungen resultieren könnten.

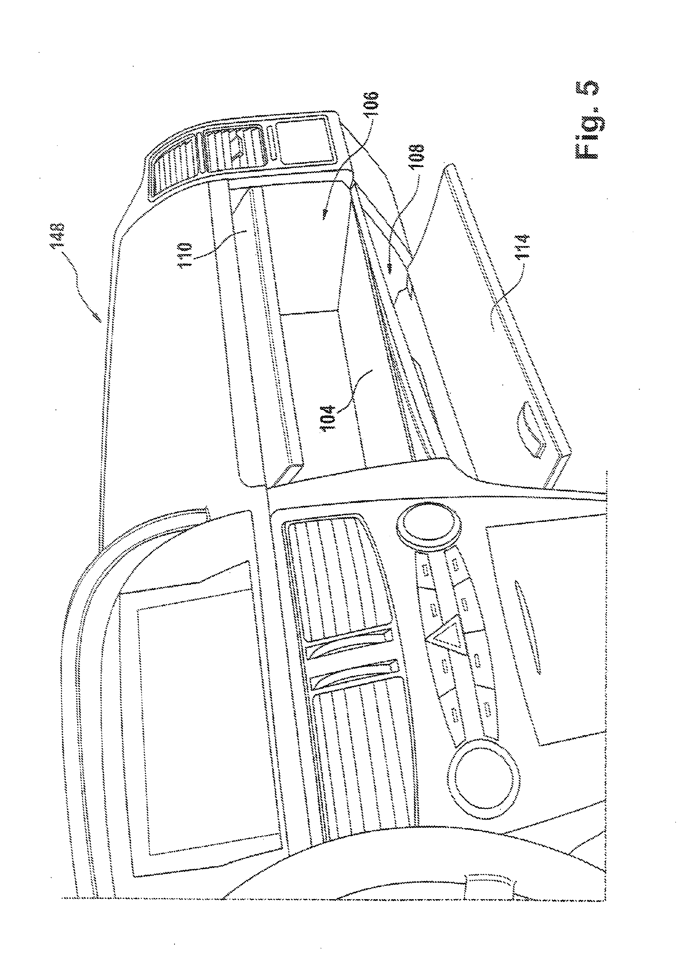

Die Figur 5 zeigt die Instrumententafel 148 in perspektivischer Ansicht vom Kraftfahrzeug-Innenraum her betrachtet, bei geöffneten Deckeln 110. und 114. In der hier dargestellten Ausführungsform ist das Staufach 100 als geteilter Handschuhkasten mit zwei übereinander liegenden Stauräumen 106 und 108 (vgl. Figur 1 und Figur 4) ausgebildet. Der obere Deckel 110 ist in seiner dargestellten Öffnungsposition fast vollständig in die Instrumententafel 148 hinein versenkt.

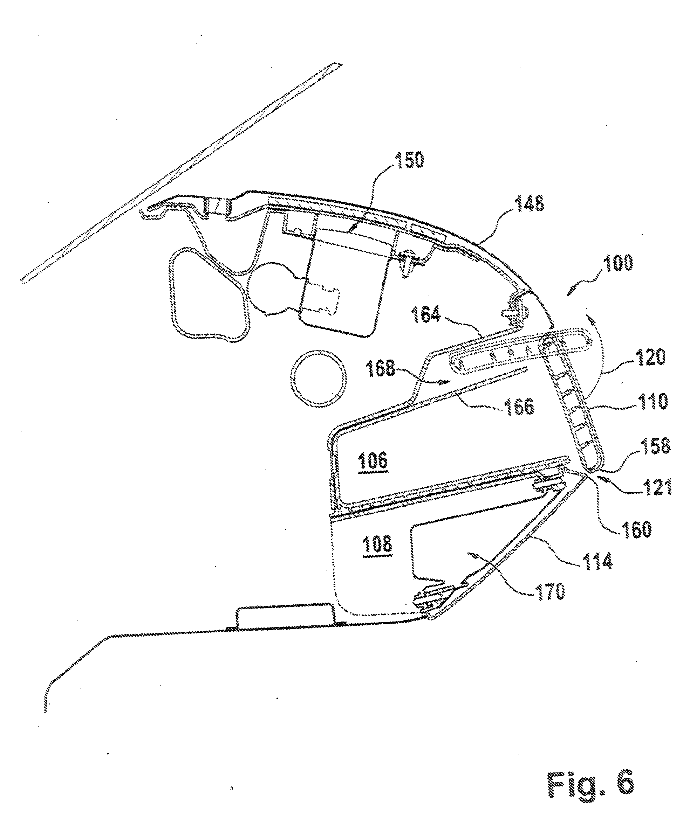

Die Figur 6 zeigt eine Ausstattungsvariante der in den Figuren 4 und 5 dargestellten Ausführungsform. Bei dieser Ausführungsform befindet sich in dem unteren Stauraum 108 ein Energieabsorptionskörper 170. Durch den unteren Deckel 114 wird eine dem Energieabsorptionskörper 170 vorgelagerte Aufprallfläche gebildet. Der Deckel 114 ist in dieser Ausführungsform nicht zu öffnen, sondern mit der Instrumententafel 148 fest verbunden.

Durch den Energieabsorptionskörper 170 und den vorgelagerten Deckel 114 wird hier also ein Knieaufprallschutz, das heißt ein sogenanntes Kneepad, geschaffen. Die äußere Kontur der Instrumententafel 148 ist dabei im wesentlichen identisch zu der äußeren Kontur in der Ausführungsform der Figur 4 mit dem Unterschied, dass der Betätigungsgriff 122 entfällt, da sich ja der untere Deckel 114 nicht öffnen lässt.

Der Energieabsorptionskörper 170 kann zum Beispiel aus einem Schaumstoff oder einem Schaumverbundwerkstoff bestehen und / oder eine wabenförmige Struktur zur Energieabsorption aufweisen.

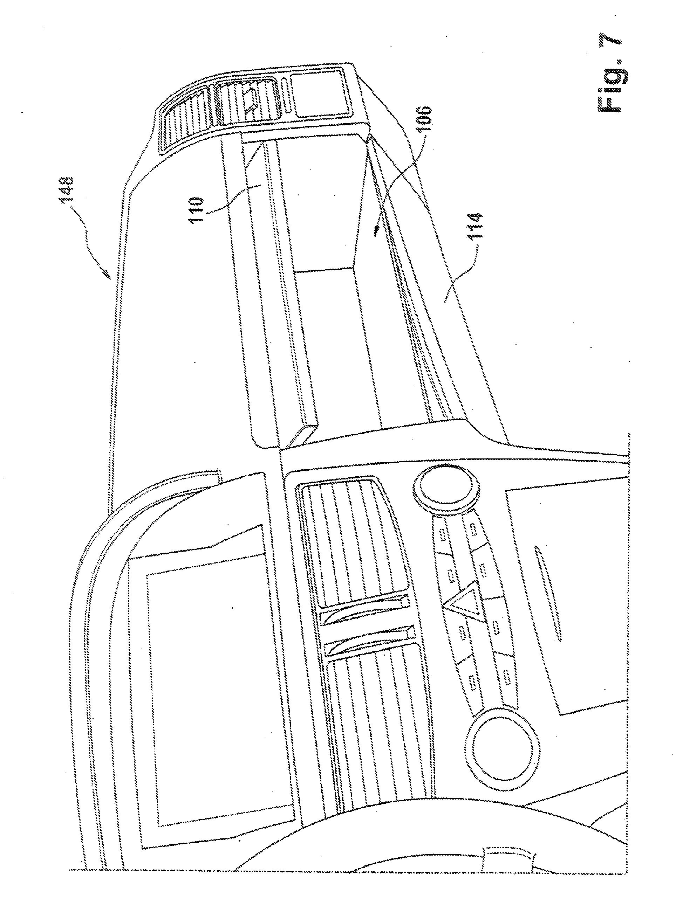

Die Figur 7 zeigt die Ausführungsvariante der Instrumententafel der Figur 6 in perspektivischer Ansicht bei geöffnetem oberen Deckel 110. Bei dieser Ausführungsvariante ist die Kopplung 126 (vgl. Figuren 1, 2 und 3) zwischen den Deckeln 110 und 114 nicht realisiert oder aufgehoben, so dass sich der Deckel 110 unabhängig von dem Deckel 114 öffnen und schließen lässt. Beispielsweise wird die Kopplung der Deckel 110 und 114 dadurch aufgehoben, dass die Hebel 128, 132 und 138 (vgl. Figuren 2 und 3) nicht montiert werden.

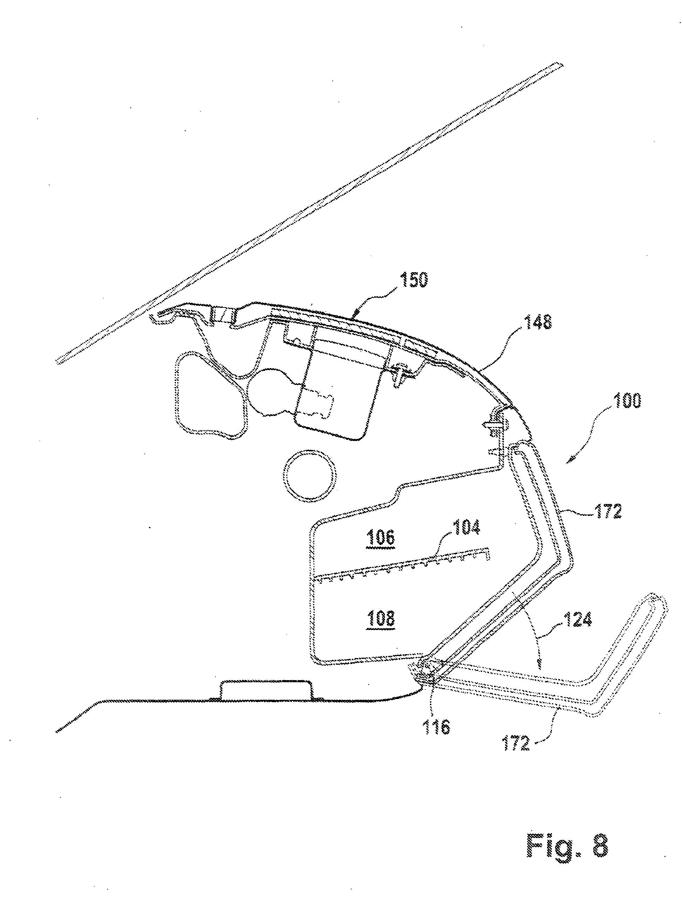

Die Figur 8 zeigt eine weitere Ausstattungsvariante der in den Figuren 4 bis 7 dargestellten Ausführungsformen der Instrumententafel 148. In dieser Ausstattungsvariante werden die Stauräume 106 und 108 durch einen einzigen Deckel 172 abgedeckt, der um die untere Achse 116 schwenkbar ist. Der Deckel 172 hat im wesentlichen dieselbe Kontur, wie die Deckel 110 und 114, wenn sich diese in ihrer geschlossenen Position befinden.

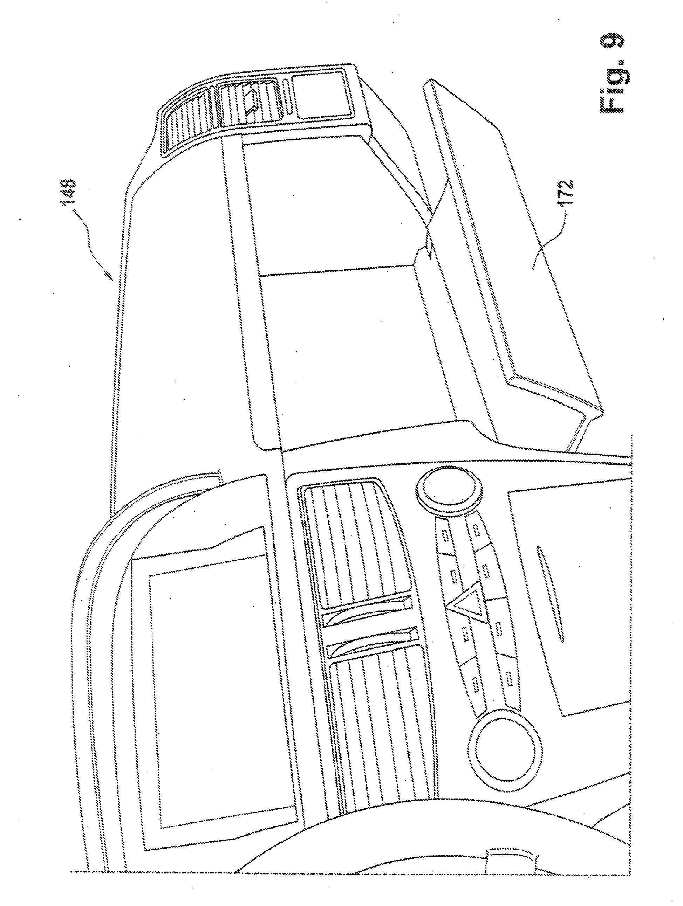

Die Figur 9 zeigt eine perspektivische Ansicht einer weiteren Ausstattungsvariante, die weitgehend der Ausführungsform der Figur 8 entspricht, wobei die Trennwand 104 entfallen ist.

Wie anhand der Figuren 4 bis 9 dargestellt, wird also ein Handschuhkastensystem geschaffen, welches verschiedene Ausstattungsvarianten ermöglicht, wobei das äußere Erscheinungsbild der Instrumententafel 148 jeweils im wesentlichen unverändert bleibt. Durch den modularen Aufbau lassen sich so kostengünstig verschiedene Ausstattungsvarianten, je nach Kundenwunsch und je nach den in den jeweiligen Ländern bestehenden gesetzlichen Regelungen schaffen.

Die Figur 10 zeigt in perspektivischer Ansicht ein Befestigungselement 174, durch welches der Stauraum 106 (vgl. Figur 1 und Figur 4 bis 8) nach vorne abgeschlossen wird. In dem Befestigungselement 174 ist eine Öffnung 176 gebildet, durch die der Stauraum 106 bei geöffnetem Deckel 110 zugänglich ist. Durch das Befestigungselement 174 wird der Deckel 110 schwenkbar befestigt, indem das Befestigungselement 174 eine Achse 112 definiert, die bei dieser Ausführungsform in etwa auf der Höhe der Trennwand 104 (vgl. Figur 1 und Figuren 4 bis 9) verläuft. An dem Deckel 110 sind seitliche Schenkel 178 angeordnet, über die der Deckel 110 mit der Achse 112 verbunden ist. Wenn der Deckel 110 um die Achse 112 verschwenkt wird, fährt der zumindest teilweise in den Aufnahmebereich 168 (vgl. Figur 4 und 6) ein.

Die Figur 11 zeigt in perspektivischer Ansicht eine weitere Ausführungsform des Befestigungselements 174. In der Ausführungsform der Figur 11 wird durch das Befestigungselement 174 eine Kulissenführung 180 gebildet, entlang derer der Deckel 110 geöffnet und geschlossen werden kann. In der hier betrachteten Ausführungsform wird die Öffnungs- und Schließbewegung des Deckels durch einen Elektromotor 182 über ein Zahnrad 184, welches in eine an der Rückseite des Deckels 110 angeordnete Zahnung 186 eingreift, angetrieben. Auch in dieser Ausführungsform kann der Deckel 110 bei seiner Öffnungsbewegung entlang der Kulissenführung 180 zumindest teilweise in den Aufnahmebereich 168 (vgl. Figur 4 und 6) verfahren werden.

Das Einschalten des Elektromotors 182 erfolgt beispielsweise durch Betätigung eines Schalters an der Instrumententafel 148 (vgl. Figur 4 bis 9) und / oder durch Betätigung des Betätigungsgriffs 122 (vgl. Figur 1, 4 und 5).

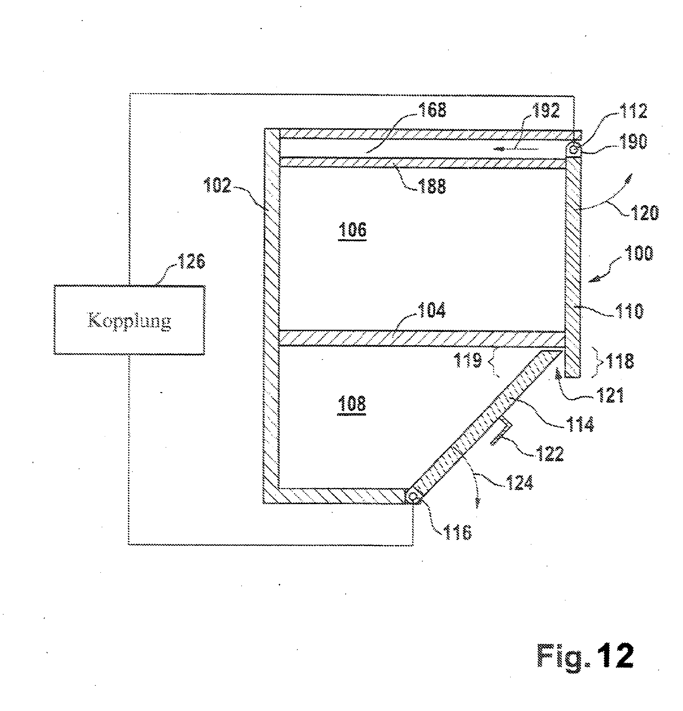

Die Figur 12 zeigt eine weitere Ausführungsform eines Handschuhkastens 100 für ein Kraftfahrzeug. Der Handschuhkasten 100 hat ein Gehäuse 102, welches durch eine Trennwand 104 in einen oberen Stauraum 106 und einen unteren Stauraum 108 unterteilt ist. In dem hier betrachteten Ausführungsbeispiel verläuft die Trennwand 104 in ihrer Einbauposition im wesentlichen in horizontale Richtung.

Ein Handschuhkastendeckel 110 ist an dem Gehäuse 102 um eine Achse 112 nach oben schwenkbar gelagert. Mit Hilfe der durch die obere Trennwand 188 und das Kulissenführungselement 190 gebildeten Kulissenführung kann der Handschuhkastendeckel in den Aufnahmebereich 168 hinein versenkt werden.

In seiner in der Figur 3 dargestellten geschlossenen Position deckt der Handschuhkastendeckel 110 den Stauraum 106 ab.

Ein weiterer Handschuhkastendeckel 114 des Handschuhkastens 100 ist um eine Achse 116 an dem Gehäuse 102 nach unten schwenkbar gelagert. In seiner in der Figur 3 gezeigten geschlossenen Position deckt der Handschuhkastendeckel 114 den unteren Stauraum 108 ab.

In der hier betrachteten Ausführungsform erstreckt sich der Handschuhkastendeckel 110 über die Trennwand 104 hinweg. Dadurch wird an dem Handschuhkastendeckel 110 ein Kantenbereich 118 gebildet. Ein Benutzer kann den Handschuhkastendeckel 110 in dem Kantenbereich 118 bequem anfassen, um diesen in die Schwenkrichtung 120 nach oben aufzuschwenken. Der Kantenbereich verdeckt den bei geschlossenen Deckeln 110, 114 vom Fahrzeuginnenraum betrachtet dahinter liegenden Bereich 119 des Handschuhkastendeckels 114, der eine Fuge 121 mit dem anderen Handschuhkastendeckel 110 bildet.

Der untere Handschuhkastendeckel 114 kann einen Betätigungsgriff 122 aufweisen. Durch Ziehen an dem Betätigungsgriff 122 kann ein Benutzer den unteren Handschuhkastendeckel 114 in Schwenkrichtung 124 nach unten aufschwenken.

Die beiden Handschuhkastendeckel 110 und 114 können über eine Kopplung 126 miteinander gekoppelt sein, so dass bei Öffnung eines der beiden Handschuhkastendeckel der jeweils andere Handschuhkastendeckel ebenfalls geöffnet wird. Die Kopplung 126 kann so ausgebildet sein, dass das Gleiche auch für das Schließen der Handschuhkastendeckel 110, 114 gilt, das heißt, das bei Schließung eines der Handschuhkastendeckel der jeweils andere Handschuhkastendeckel ebenfalls automatisch mit geschlossen wird.

Die Kopplung 126 kann hierzu mechanisch, z.B. über einen Hebelmechanismus, elektromechanisch und / oder elektronisch ausgebildet sein.

In dem hier betrachteten Ausführungsbeispiel ist die Kopplung 126 so ausgebildet, dass beim Schließen der Handschuhkastendeckel 110,114 der Handschuhkastendeckel 114 dem Handschuhkastendeckel 110 voreilt, so dass der Handschuhkastendeckel 114 seine in der Fig. 12 gezeigte geschlossene Position erreicht hat bevor der Handschuhkastendeckel 110 seine geschlossene Position erreicht. Dadurch wird vermieden, dass die Handschuhkastendeckel 110, 144 kurz vor erreichen der jeweiligen geschlossenen Position mit deren äußeren Kanten aufeinanderprallen.

### Bezugszeichenliste

- 100: Staufach
- 102: Gehäuse
- 104: Trennwand
- 106: Stauraum
- 108: Stauraum
- 110: Deckel
- 112: Achse
- 114: Deckel
- 116: Achse
- 118: Kantenbereich
- 120: Schwenkrichtung
- 121: Fuge
- 122: Betätigungsgriff
- 124: Schwenkrichtung
- 126: Kopplung
- 128: Hebel
- 130: Achse
- 132: Hebel
- 134: Achse
- 136: Bereich
- 138: Hebel
- 140: Bereich
- 142: Anschlagfläche
- 144: Schwenkrichtung
- 146: Schwenkrichtung
- 148: Instrumententafel
- 150: Beifahrerairbag
- 152: Beifahrer
- 154: Beifahrersitz
- 158: untere Kante
- 160: obere Kante
- 162: Blickrichtung
- 164: Wandung
- 166: Begrenzung
- 168: Aufnahmebereich
- 170: Energieabsorptionskörper
- 172: Deckel
- 174: Befestigungselement
- 176: Öffnung
- 178: Schenkel
- 180: Kulissenführung
- 182: Elektromotor
- 184: Zahnrad
- 186: Zahnung

## Patentansprüche

1. Handschuhkasten für ein Kraftfahrzeug mit einem ersten Stauraum (106), der von einem zweiten Stauraum (108) getrennt ist, und mit einem ersten Deckel (110) zur Abdeckung des ersten Stauraums und mit einem zweiten Deckel (114) zur Abdeckung des zweiten Stauraums, , wobei der erste Deckel über dem zweiten Deckel angeordnet ist, wobei der erste Deckel zumindest teilweise in eine Instrumententafel hinein versenkbar ist, , wobei die ersten und zweiten Deckel so miteinander gekoppelt sind (126), dass bei Öffnung einer der Deckel der andere Deckel ebenfalls geöffnet wird, wobei der Handschuhkasten einen ersten Hebel (128) für die mechanische Kopplung der ersten und zweiten Deckel aufweist und einen zweiten Hebel (138) zur mechanischen Kopplung des ersten Deckels mit dem ersten Hebel aufweist, wobei die ersten und zweiten Hebel drehbar miteinander verbunden sind,
**dadurch gekennzeichnet, dass**
- der zweite Deckel in den Kraftfahrzeuginnenraum hinein aufschwenkbar ist,
- der erste Deckel so ausgebildet ist, dass er eine Fuge (121) zwischen den ersten und zweiten Deckeln verdeckt,
- eine Achse (134) des ersten Hebels bezüglich eines Gehäuses (102) des Handschuhkastens schwenkbar gelagert ist und der erste Hebel mit dem zweiten Deckel verbunden ist,
- der Handschuhkasten eine dritten Hebel (132) zur schwenkbaren Lagerung der Achse des ersten Hebels aufweist.

2. Handschuhkasten nach Anspruch 1, wobei der erste Deckel so ausgebildet ist, dass, wenn sich das Handschuhkasten in seiner Einbauposition in dem Kraftfahrzeug befindet, die Fuge von einer Sitzposition (154, 162) in dem Innenraum des Kraftfahrzeugs aus betrachtet, verdeckt wird.

3. Handschuhkasten nach Anspruch 2, wobei eine untere Kante (158) des ersten Deckels aus der Sitzposition betrachtet vor einer oberen Kante (160) des zweiten Deckels liegt.

4. Handschuhkasten nach Anspruch 1, 2 oder 3, mit einer Trennwand (104) zur Trennung der ersten und zweiten Stauräume, wobei sich der erste Deckel über die Trennwand hinweg erstreckt.

5. Handschuhkasten nach einem der vorhergehenden Anspruche, wobei der erste Stauraum in einer Einbauposition oberhalb des zweiten Stauraums angeordnet ist.

6. Handschuhkasten nach einem der vorhergehenden Ansprüche, wobei die ersten und zweiten Deckel so miteinander gekoppelt sind (126), dass bei Öffnung eines der Deckel der andere Deckel ebenfalls geöffnet wird.

7. Handschuhkasten nach einem der vorhergehenden Anspruche, wobei die Deckel so miteinander gekoppelt sind, dass bei Schließung eines der Deckel der andere Deckel ebenfalls geschlossen wird.

8. Handschuhkasten nach einem der vorhergehenden Ansprüche, wobei nur der zweite Deckel einen Betätigungsgriff (122) aufweist.

9. Handschuhkasten nach einem der vorhergehenden Ansprüche, wobei der zweite Deckel einen oberen Bereich (119) hat, der von einem sich über eine Trennwand (104) hinweg erstreckenden Bereich (118) des ersten Deckels in einer Einbauposition verdeckt wird, wenn die Deckel geschlossen sind.

10. Handschuhkasten nach einem der vorhergehenden Ansprüche, mit einem Hebelmechanismus (128, 134, 138) für die mechanische Kopplung der ersten und zweiten Deckel.

11. Handschuhkasten nach einem der vorhergehenden Ansprüche, wobei die Kopplung (126) der ersten und zweiten Deckel mechanisch, elektromechanisch und / oder elektronisch ausgebildet ist.

12. Handschuhkasten nach einem der vorhergehenden Ansprüche, wobei einer der Stauräume einen Energieabsorptionskörper (170) beinhaltet.

13. Handschuhkasten nach Anspruch 12, wobei durch den Energieabsorptionskörper ein Knieaufprallschutz gegeben ist.

14. Handschuhkasten nach einem der vorhergehenden Ansprüche, mit einem Aufnahmebereich (168) für zumindest einen Abschnitt des ersten Deckels.

15. Handschuhkasten nach einem der vorhergehenden Ansprüche, mit einer Kulissenführung (188, 190; 180, 190) zum Versenken des ersten Deckels:

16. Handschuhkasten nach einem der vorhergehenden Ansprüche, wobei der erste Deckel schwenkbar (112) gelagert ist.

17. Handschuhkasten nach einem der vorhergehenden Ansprüche, mit einem Antrieb (182, 184, 186) zum zumindest teilweise Öffnen und / oder Schließen des ersten Deckels.

18. Handschuhkasten nach Anspruch 1, wobei eine Schwenkachse (130) des dritten Hebels an dem Handschuhkastengehäuse angeordnet ist.

19. Handschuhkasten nach Anspruch 1 oder 18, wobei der dritte Hebel eine Anschlagfläche (142) zur Begrenzung einer Schwenkbewegung des ersten Hebels aufweist.

20. Instrumententafel mit einem Handschuhkasten (100) nach einem der vorhergehenden Ansprüche.

21. Instrumententafel nach Anspruch 20, wobei einer der Stauräume einen Energieabsorptionskörper (108) beinhaltet.

22. Instrumententafel nach Anspruch 21, wobei der Deckel, welcher den den Energieabsorptionskörper beinhaltenden Stauraum abdeckt, nicht öffnenbar ist.

## Claims

1. Glove box for a motor vehicle, having a first storage space (106) which is separate from a second storage space (108) and having a first lid (110) for covering the first storage space and having a second lid (114) for covering the second storage space, wherein the first lid is arranged above the second lid, wherein the first lid can be at least partially retracted into an instrument panel, wherein the first and second lids are coupled to one another (126) in such a way that, when one of the lids is opened, the other lid is likewise opened, wherein the glove box has a first lever (128) for mechanically coupling the first and second lids and a second lever (138) for mechanically coupling the first lid to the first lever, wherein the first and second levers are rotatably connected to one another,
**characterized in that**
- the second lid can be pivoted into the vehicle interior space,
- the first lid is designed so as to hide a joint (121) between the first and second lids,
- an axle (134) of the first lever is mounted so as to be pivotable with respect to a housing (102) of the glove box and the first lever is connected to the second lid,
- the glove box has a third lever (132) for pivotably mounting the axle of the first lever.

2. Glove box according to Claim 1, wherein the first lid is designed such that, when the glove box is in its installed position in the motor vehicle, the joint is hidden as viewed from a seat position (154, 162) in the interior space of the motor vehicle.

3. Glove box according to Claim 2, wherein a lower edge (158) of the first lid is situated in front of an upper edge (160) of the second lid as viewed from the seat position.

4. Glove box according to Claim 1, 2 or 3, having a partition (104) for separating the first and second storage spaces, wherein the first lid extends beyond the partition.

5. Glove box according to one of the preceding claims, wherein the first storage space is arranged above the second storage space in an installed position.

6. Glove box according to one of the preceding claims, wherein the first and second lids are coupled to one another (126) in such a way that, when one of the lids is opened, the other lid is likewise opened.

7. Glove box according to one of the preceding claims, wherein the lids are coupled to one another in such a way that, when one of the lids is closed, the other lid is likewise closed.

8. Glove box according to one of the preceding claims, wherein only the second lid has an actuating handle (122).

9. Glove box according to one of the preceding claims, wherein the second lid has an upper region (119) which, when the lids are closed, is covered by a region (118), which extends beyond a partition (104), of the first lid in an installed position.

10. Glove box according to one of the preceding claims, having a lever mechanism (128, 134, 138) for mechanically coupling the first and second lids.

11. Glove box according to one of the preceding claims, wherein the coupling (126) of the first and second lids is of mechanical, electromechanical and/or electronic design.

12. Glove box according to one of the preceding claims, wherein one of the storage spaces contains an energy absorption body (170).

13. Glove box according to Claim 12, wherein the energy absorption body serves to provide knee impact protection.

14. Glove box according to one of the preceding claims, having a receiving region (168) for at least one section of the first lid.

15. Glove box according to one of the preceding claims, having a slotted guide (188, 190; 180, 190) for the retraction of the first lid.

16. Glove box according to one of the preceding claims, wherein the first lid is pivotably (112) mounted.

17. Glove box according to one of the preceding claims, having a drive (182, 184, 186) for at least partially opening and/or closing the first lid.

18. Glove box according to Claim 1, wherein a pivot axle (130) of the third lever is arranged on the glove box housing.

19. Glove box according to Claim 1 or 18, wherein the third lever has a stop surface (142) for limiting a pivoting movement of the first lever.

20. Instrument panel having a glove box (100) according to one of the preceding claims.

21. Instrument panel according to Claim 20, wherein one of the storage spaces contains an energy absorption body (108).

22. Instrument panel according to Claim 21, wherein the lid which covers the storage space which contains the energy absorption body cannot be opened.

## Revendications

1. Boîte à gants pour un véhicule automobile, comprenant un premier espace de rangement (106), qui est séparé d'un deuxième espace de rangement (108), et comprenant un premier couvercle (110) pour couvrir le premier espace de rangement et un deuxième couvercle (114) pour couvrir le deuxième espace de rangement, le premier couvercle étant disposé par dessus le deuxième couvercle, le premier couvercle pouvant être enfoncé au moins en partie dans un tableau de bord, les premier et deuxième couvercles étant accouplés l'un à l'autre (126) de telle sorte que lors de l'ouverture de l'un des couvercles, l'autre couvercle s'ouvre également, la boîte à gants présentant un premier levier (128) pour l'accouplement mécanique du premier et du deuxième couvercle et un deuxième levier (138) pour l'accouplment mécanique du premier couvercle au premier levier, les premier et deuxième leviers étant connectés l'un à l'autre de manière rotative,
**caractérisée en ce que**
- le deuxième couvercle peut être ouvert par pivotement dans l'habitacle du véhicule,
- le permier couvercle est réalisé de telle sorte qu'il recouvre un joint (121) entre le premier et le deuxième couvercle,
- un axe (134) du premier levier est monté de manière pivotante par rapport à un boîtier (102) de la boîte à gants, et le premier levier est connecté au deuxième couvercle,
- la boîte à gants présente un troisième levier (132) pour le support pivotant de l'axe du premier levier.

2. Boîte à gants selon la revendication 1, dans laquelle le premier couvercle est réalisé de telle sorte que, lorsque la boîte à gants se trouve dans sa position installée dans le véhicule, le joint soit recouvert, considéré depuis une position assise (154, 162) dans l'habitacle du véhicule.

3. Boîte à gants selon la revendication 2, dans laquelle une arête inférieure (158) du premier couvercle, considérée depuis la position assise, se situe devant une arête supérieure (160) du deuxième couvercle.

4. Boîte à gants selon la revendication 1, 2 ou 3, comprenant une paroi de séparation (104) pour la séparation du premier et du deuxième espace de rangement, le premier couvercle s'étendant au-delà de la paroi de séparation.

5. Boîte à gants selon l'une quelconque des revendications précédentes, dans laquelle le premier espace de rangement est disposé, dans une position installée, au-dessus du deuxième espace de rangement.

6. Boîte à gants selon l'une quelconque des revendications précédentes, dans laquelle le premier et le deuxième couvercle sont accouplés l'un à l'autre (126) de telle sorte que lors de l'ouverture de l'un des couvercles, l'autre couvercle soit également ouvert.

7. Boîte à gants selon l'une quelconque des revendications précédentes, dans laquelle les couvercles sont accouplés l'un à l'autre de telle sorte que lors de la fermeture de l'un des couvercles, l'autre couvercle soit également fermé.

8. Boîte à gants selon l'une quelconque des revendications précédentes, dans laquelle seulement le deuxième couvercle présente une poignée d'actionnement (122).

9. Boîte à gants selon l'une quelconque des revendications précédentes, dans laquelle le deuxième couvercle a une région supérieure (119), qui est recouverte par une région (118) du premier couvercle s'étendant au-delà d'une paroi de séparation (104) dans une position d'installation, lorsque les couvercles sont fermés.

10. Boîte à gants selon l'une quelconque des revendications précédentes, comprenant un mécanisme de leviers (128, 134, 138) pour l'accouplement mécanique des premier et deuxième couvercles.

11. Boîte à gants selon l'une quelconque des revendications précédentes, dans laquelle l'accouplement (126) des premier et deuxième couvercles s'effectue de manière mécanique, électromécanique et/ou électronique.

12. Boîte à gants selon l'une quelconque des revendications précédentes, dans laquelle l'un des espaces de rangement contient un corps d'absorption d'énergie (170).

13. Boîte à gants selon la revendication 12, dans laquelle le corps d'absorption d'énergie fournit une protection contre les impacts des genoux.

14. Boîte à gants selon l'une quelconque des revendications précédentes, comprenant une région de réception (168) pour au moins une portion du premier couvercle.

15. Boîte à gants selon l'une quelconque des revendications précédentes, comprenant un guide à coulisse (188, 190 ; 180, 190) pour enfoncer le premier couvercle.

16. Boîte à gants selon l'une quelconque des revendications précédentes, dans laquelle le premier couvercle est monté de manière pivotante (112).

17. Boîte à gants selon l'une quelconque des revendications précédentes, comprenant un entraînement (182, 184, 186) pour ouvrir et/ou fermer au moins partiellement le premier couvercle.

18. Boîte à gants selon la revendication 1, dans laquelle un axe de pivotement (130) du troisième levier est disposé sur le boîtier de la boîte à gants.

19. Boîte à gants selon la revendication 1 ou 18, dans laquelle le troisième levier présente une surface de butée (142) pour limiter un mouvement de pivotement du premier levier.

20. Tableau de bord comprenant une boîte à gants (100) selon l'une quelconque des revendications précédentes.

21. Tableau de bord selon la revendication 20, dans lequel l'un des espaces de rangement contient un corps d'absorption d'énergie (108).

22. Tableau de bord selon la revendication 21, dans lequel le couvercle, qui recouvre l'espace de rangement contenant le corps d'absorption d'énergie, ne peut pas être ouvert.
